# EUROPÄISCHE PATENTSCHRIFT

(11) **EP 2 408 591 B1**
(45) Veröffentlichungstag und Bekanntmachung des Hinweises auf die Patenterteilung: **29.05.2013**
(21) Anmeldenummer: 10707841.2
(22) Anmeldetag: 09.03.2010
(51) Int. Cl.: B23Q 1/01, B23Q 1/62

(54) **WERKZEUGMASCHINENFÜHRUNGSSCHLITTENANORDNUNG**
GUIDING CARRIAGE ARRANGEMENT FOR A MACHINE TOOL
AGENCEMENT DE CHARIOT DE GUIDAGE POUR MACHINE OUTIL

(30) Priorität: 16.03.2009 DE 102009013356
(43) Veröffentlichungstag der Anmeldung: 25.01.2012
(73) Patentinhaber: P & L GmbH & Co. KG, 29614 Soltau (DE)
(72) Erfinder: RÖDERS, Jürgen, 29614 Soltau (DE)
(74) Vertreter: Weber, Joachim
(86) Internationale Anmeldenummer: PCT/EP2010/001468
(87) Internationale Veröffentlichungsnummer: WO 2010/105755

(56) Entgegenhaltungen:
- EP-A2- 1 166 953
- DE-U1- 20 019 035

## Beschreibung

Die Erfindung bezieht sich auf eine Werkzeugmaschinenführungsschlittenanordnung mit einer ersten linearen Führungsbahn oder Achse, längs derer ein erster Schlitten linear bewegbar ist. Der Antrieb des ersten Schlittens kann mittels eines Linearmotors oder auf andere Weise erfolgen. Dabei gleitet der erste Schlitten auf ersten, zueinander parallelen Führungsschienen, welche in aus dem Stand der Technik bekannter Weise ausgebildet sind. Dabei laufen an den Führungsschienen jeweils Führungswagen, durch welche eine geeignete Kraftübertragung möglich ist.

Weiterhin umfasst die Werkzeugmaschinenführungsschlittenanordnung eine zweite lineare Führungsbahn (Achse, Bewegungsachse), welche senkrecht zu der ersten linearen Führungsbahn angeordnet ist und längs derer sich ebenfalls ein Schlitten oder ein Bauelement bewegbar gelagert befindet.

Bei den aus dem Stand der Technik bekannten Konstruktionen kann es sich als nachteilig erweisen, dass die Führungsbahnen insgesamt nicht ausreichend steif sind und/oder dass die Lagerungen der Führungsbahnen nicht die erforderliche Steifigkeit aufweisen, so dass sich insgesamt eine nicht sehr steife Konstruktion einer Werkzeugmaschine ergeben kann. Dabei erweist es sich zusätzlich als nachteilig, dass die Regelungs- und Steuerungsmöglichkeit und die sich daraus ergebenden Einstellmöglichkeiten für die Bearbeitung eines Werkstücks von der Steifigkeit und dem hieraus resultierenden Eigenfrequenzverhalten der Werkzeugmaschine und der einzelnen Komponenten abhängt. Hochpräzise Bearbeitungen können somit schwierig wenn nicht gar ausgeschlossen sein.

Die EP 1 366 852 A2 beschreibt eine Werkzeugmaschine mit einer schwenkbaren Werkstückspindel, bei welcher ein Kreuzschlitten auf einer horizontalen Führungsbahn verschiebbar gelagert ist. An dem Kreuzschlitten wiederum ist vertikal verfahrbar ein Vertikalschlitten gelagert, welcher eine Werkstückspindel trägt.

Die EP 1 166 953 A2 beschreibt ein Führungssystem für ein Koordinatenfahrwerk einer Werkzeugmaschine. Auch hierbei ist eine horizontale Führung vorgesehen, an welcher ein Kreuzschlitten angeordnet ist, welcher wiederum vertikal verschiebbar eine Pinole mit einem Werkzeug trägt.

Eine weitere Werkzeugmaschine ist aus der DE 698 19 821 T2 bekannt. Diese Werkzeugmaschine weist ebenfalls Komponenten auf, die in Form eines Kreuzschlittens an horizontalen Schienen verfahrbar sind und vertikal verfahrbar einen weiteren Schlitten lagern.

Der Erfindung liegt die Aufgabe zugrunde, eine Werkzeugmaschinenführungsschlittenanordnung zu schaffen, welche bei einfachem Aufbau und einfacher, kostengünstiger Herstellbarkeit die Nachteile des Standes der Technik vermeidet und ein hohes Maß an Steifigkeit aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass an einer ersten linearen Führungsbahn mit zumindest zwei ersten parallelen Führungsschienen linear verfahrbar ein Schlitten gelagert ist. Dieser Schlitten umschließt erfindungsgemäß einen Freiraum, in welchem rechtwinklig zu der ersten Führungsbahn ein zweiter Schlitten linear verfahrbar ist, wobei der Freiraum des ersten Schlittens durch zwei voneinander beabstandete Lagerelemente gebildet wird.

Die Erfindung zeichnet sich durch eine Reihe erheblicher Vorteile aus. Durch die erfindungsgemäße Ausgestaltung des ersten Schlittens ergibt sich ein sehr hohes Maß an Steifigkeit, da diese durch zwei voneinander beabstandete Lagerelemente gebildet wird, welche jeweils an den parallelen Führungsschienen der ersten Führungsbahn geführt sind. Durch die Ausgestaltung der Führungsbahnen und der dabei verwendeten Führungswagen wird der Schlitten präzise und mit der erforderlichen Steifigkeit an der ersten Führungsbahn gelagert. Gleichzeitig sind die beiden den ersten Schlitten bildenden Lagerelemente so ausgebildet, dass sie ebenfalls mittels paralleler Führungsschienen und zugeordneter Wagen präzise und mit hoher Steifigkeit den zweiten Schlitten lagern. Es ergibt sich somit eine Gesamtkonstruktion, die in hohem Maße präzise und mit hoher Steifigkeit arbeitet.

Durch die jeweils vorgesehene Parallelität der Führungsbahnen ist nicht nur die lineare Verfahrbarkeit mit hoher Präzision möglich, es wird auch eine Verkippung oder Verkantung zuverlässig ausgeschlossen.

Erfindungsgemäß ergibt sich somit eine optimierte Konstruktion für zwei Maschinenachsen (lineare Führungsbahnen). Bei einer der Führungsbahnen ist es dabei zusätzlich möglich, diese pinolenförmig auszubilden, um in bevorzugter Weise eine drehbare Werkzeugspindel oder Werkstückspindel zu lagern, welche in ihrer Längsrichtung zusätzlich verfahrbar ist.

Die erfindungsgemäße Werkzeugmaschinenführungsschlittenanordnung ist somit für unterschiedlichste Anwendungszwecke geeignet und kann sowohl bei Zwei-Achs-Werkzeugmaschinen als auch bei Mehr-Achs-Werkzeugmaschinen eingesetzt werden. Der Einsatz ist dabei insbesondere bei Fräsmaschinen besonders vorteilhaft, da hierbei hochpräzise Werkstückbearbeitungen ermöglicht werden.

In besonders günstiger Weiterbildung der Erfindung ist vorgesehen, dass die beiden Lagerelemente jeweils zwei zueinander rechtwinklige Funktionsflächen aufweisen, wobei eine Funktionsfläche längs der ersten Führungsschiene verfahrbar ist, während die zweite Funktionsfläche zumindest zwei zweite parallele Führungsschienen des zweiten Schlittens lagert. Die beiden den ersten Schlitten bildenden Lagerelemente bilden somit einen Freiraum mit einem quadratischen oder rechteckigen Querschnitt, in welchem der zweite Schlitten verfahrbar gelagert ist. Dabei sind an zwei gegenüberliegenden Seiten bevorzugt jeweils zwei Führungsschienen im Randbereich der Funktionsflächen vorgesehen. Diese Art der Lagerung führt zu einer erheblichen Steigerung der Gesamtsteifigkeit, da die Führungsschienen an den jeweiligen Eck- oder Kantenbereichen des zweiten Schlittens vorgesehen sind und diesen somit präzise lagern.

Ein Antrieb für den zweiten Schlitten kann sich bevorzugterweise an dessen dritter Seite befinden, welche nicht den beiden Lagerelementen zugewandt ist. Der Antrieb kann beispielsweise in Form eines Kugelrollspindelantriebs oder eines Linearmotorantriebs ausgebildet sein. Alternativ hierzu kann der Antrieb auch an einer Seite, welche einem der beiden Lagerelemente zugewandt ist, beispielsweise zwischen den Führungsschienen vorgesehen sein, es ist jedoch auch möglich, zwei Antriebe beidseitig oder in anderer Weise vorzusehen, mittels derer der zweite Schlitten verfahrbar ist.

Durch die rechteckige oder quadratische Querschnittsausgestaltung des Freiraums ergibt sich ein Höchstmaß an Steifigkeit bei relativ geringer Masse.

Besonders bevorzugt ist es erfindungsgemäß, wenn die Lagerelemente so ausgebildet sind, dass deren Funktionsflächen jeweils durch ein plattenförmiges Bauteil gebildet werden, wobei die plattenförmigen Bauteile in sich selber verrippt und versteift sein können und/oder zusätzlich über eine verrippungs- oder versteifungsartige Struktur miteinander verbunden sind.

Erfindungsgemäß führen somit die Lagerelemente, welche jeweils einen dreieckigen Querschnitt in der Seitenansicht aufweisen, zusammen mit den jeweils doppelt vorgesehenen Führungsschienenkonstruktionen und den hierbei verwendeten Führungswagen zu einer erheblichen Steigerung der Steifigkeit der Gesamtkonstruktion.

Es versteht sich, dass erfindungsgemäß auch zusätzliche, weitere Führungsschienen vorgesehen sein können, um die Steifigkeit der Gesamtkonstruktion weiter zu steigern.

Um eine möglichst steife Konstruktion des ersten Schlittens zu erzielen, sind die Lagerelemente, wie bereits erwähnt, verrippt ausgebildet, so dass sie die aus dem zweiten Schlitten auftretenden Kräfte verformungsfrei aufnehmen und an die erste Führungsbahn übertragen können. Eine Möglichkeit der Verrippung ist dabei insbesondere eine einfache Kreuzverrippung in der Mitte, zusätzlich zu Querrippen, die zwischen der ersten und der zweiten Führungsbahn verlaufen.

Eine weitere Erhöhung der Steifigkeit ergibt sich dadurch, dass die beiden Lagerelemente zusätzlich durch zumindest ein plattenförmiges Verbindungselement miteinander verbunden sind, um den quadratischen oder rechteckigen Freiraum, in dem sich der zweite Schlitten bewegt, kastenförmig zu schließen. Auch das plattenförmige Verbindungselement ist bevorzugterweise verrippt. Das Verbindungselement kann bevorzugt auch als Anbringung für die Antriebseinheit, beispielsweise den Linearmotor, dienen. Eine Verbindung des zumindest einen Verbindungselements mit den Lagerelementen kann durch Verschrauben erfolgen. Es ergibt sich somit ein geschlossenes, in sich stabiles Gesamtsystem des ersten Schlittens. Der zweite Schlitten kann sich dabei an dem ersten Schlitten über acht Führungswagen auf vier Führungsschienen abstützen.

Weiterhin kann es erfindungsgemäß günstig sein, an zumindest einer Seite des zweiten Schlittens, beispielsweise zwischen den Führungsschienen, einen Maßstab vorzusehen, beispielsweise einen Glasmaßstab.

Im Folgenden wird die Erfindung anhand eines Ausführungsbeispiels in Verbindung mit der Zeichnung beschrieben. Dabei zeigt:
- Fig. 1: eine perspektivische Teilansicht einer erfindungsgemäß ausgebildeten Werkzeugmaschine in Form einer Portalmaschine mit der erfindungsgemäßen Werkzeugmaschinenführungsschlittenanordnung,
- Fig. 2: eine Seitenansicht der Darstellung der Fig. 1,

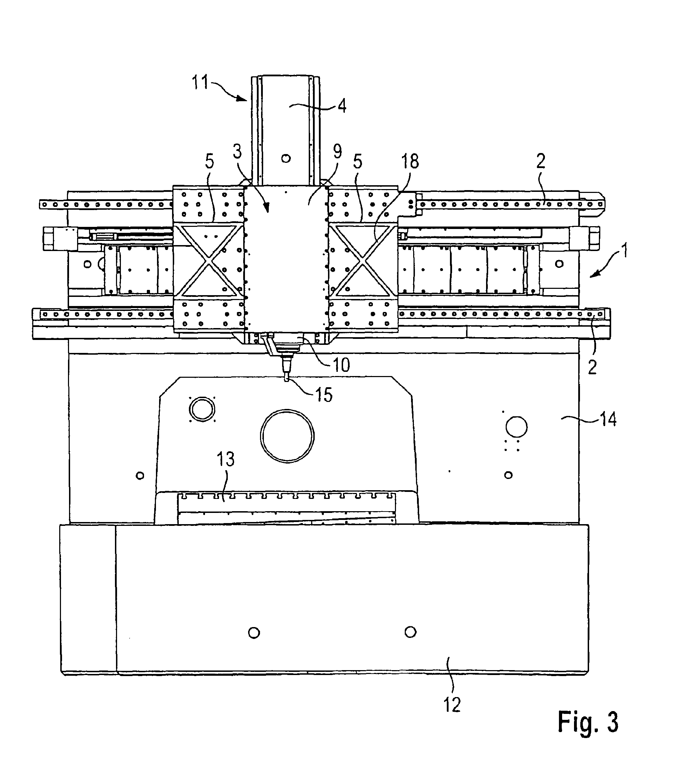

- Fig. 3: eine Stirnansicht der Darstellung der Fig. 1,
- Fig. 4: eine Draufsicht, und
- Fig. 5: eine vergrößerte Draufsicht analog Fig. 4.

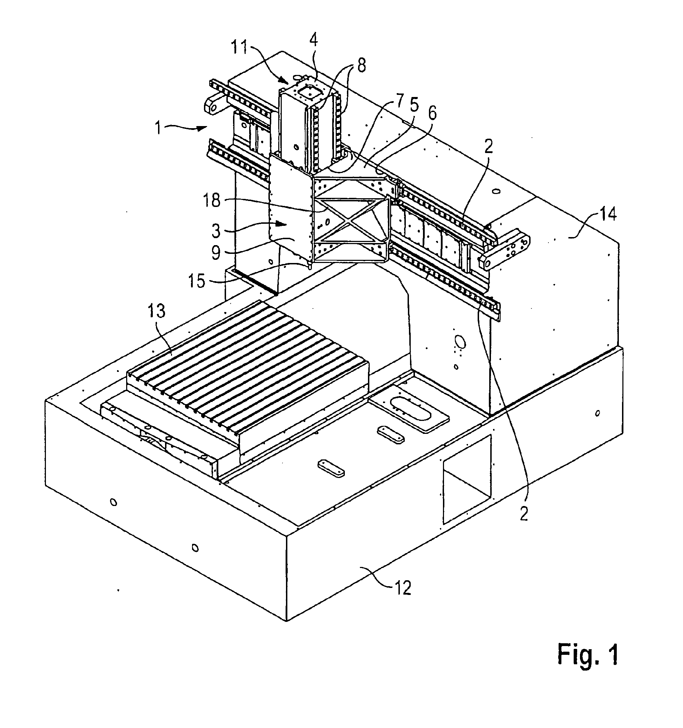

Die in Fig. 1 dargestellte Portalmaschine umfasst ein Gestell 12, an welchem ein Tisch 13 gelagert ist, der optional längs des Gestells 12 verfahrbar ist. An dem Gestell 12 ist ein Portal 14 gelagert, so dass ein auf dem Tisch 13 gespanntes Werkstück (nicht dargestellt) mittels eines Werkzeugs 15 bearbeitet werden kann, wobei das Werkzeug 15 an einer Werkzeugspindel 10 gelagert ist, die mittels eines nicht dargestellten Antriebs drehbar und optional in der Art einer Pinole längenverschiebbar an einem zweiten Schlitten 4 gelagert ist.

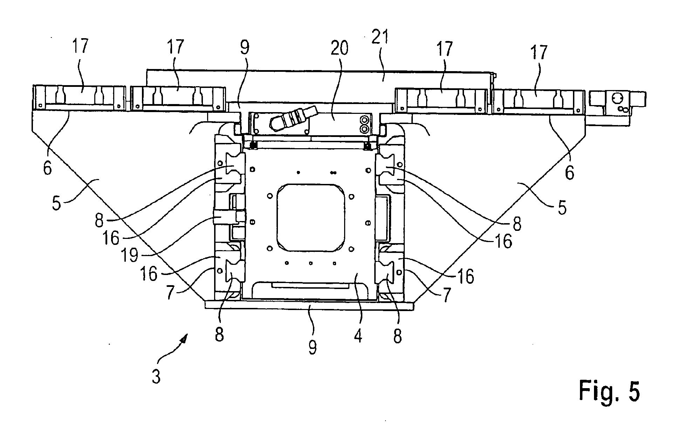

Der zweite Schlitten 4 weist einen im Wesentlichen quadratischen oder rechteckigen Querschnitt auf und ist mit insgesamt vier Führungsschienen 8 versehen, an denen Führungswagen 16 (siehe Fig. 5) laufen, um somit eine zweite lineare Führungsbahn 11 (Achse, Bewegungsachse, Y-Achse) zu bilden, längs derer der zweite Schlitten 4 längs einer vertikalen Achse verfahrbar ist. Auf die Darstellung der Antriebsmittel und weiterer Details wurde aus Gründen der Einfachheit verzichtet.

Der zweite Schlitten 4 ist somit an seinen Eckpunkten mittels der zweiten Führungsschienen 8 mit hoher Steifigkeit und Stabilität gelagert.

Die Lagerung des zweiten Schlittens 4 erfolgt an einem ersten Schlitten 3, welcher durch zwei seitliche Lagerelemente 5 gebildet wird, welche wiederum jeweils an zwei zueinander parallelen ersten Führungsschienen 2 verfahrbar sind. Auch hierbei wurde aus Gründen der Einfachheit auf die Darstellung des Antriebs verzichtet.

Die beiden Lagerelemente 5 sind über stirnseitige plattenförmige Verbindungselemente 9 miteinander verbunden und umschließen somit den rechteckigen oder quadratischen Freiraum, in welchem der zweite Schlitten 4 vertikal verfahrbar ist.

Die ersten Führungsschienen 2 sind an dem Portal 14 angebracht und umfassen ebenfalls Führungswagen 17, so wie dies aus dem Stand der Technik bekannt ist.

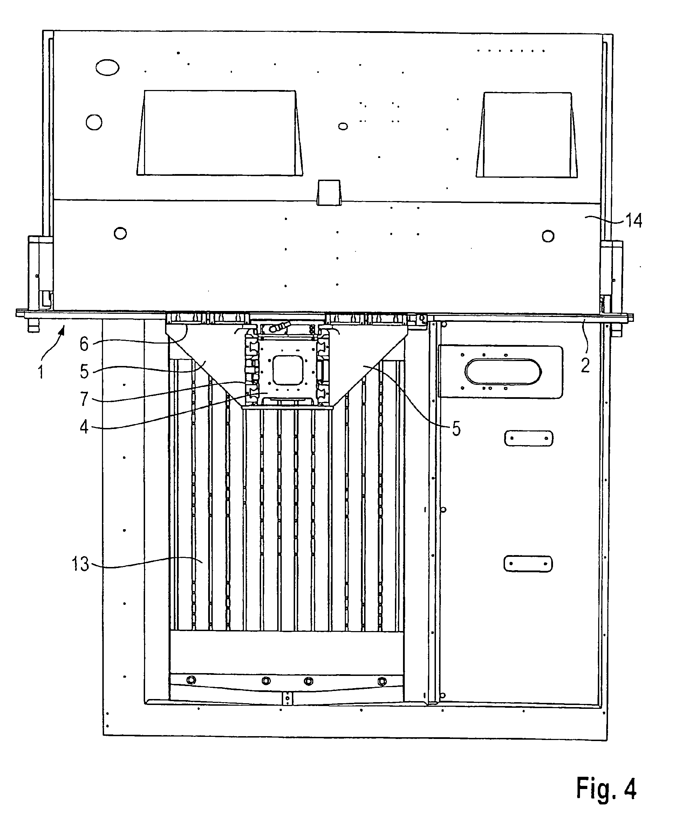

Die beiden Lagerelemente 5 weisen jeweils plattenförmige Funktionsflächen 6 und 7 auf, die an den ersten Führungsschienen 2 und den zugeordneten Führungswagen 17 sowie an den zweiten Führungsschienen 8 und den zugeordneten Führungswagen 16 gelagert sind. Die plattenförmigen Funktionsflächen 6, 7 sind in sich verrippt und versteift und über diagonale Verrippungen oder Versteifungen miteinander verbunden, so wie dies insbesondere aus Fig. 1 ersichtlich ist. Es ergibt sich somit eine in der Draufsicht dreieckige Ausgestaltung (siehe auch Fig. 4 und 5). Die beiden Lagerelemente 5 sind somit in sich sehr steif und stabil und bildern durch ihre Lagerung an den zueinander beabstandeten, parallelen ersten Führungsschienen 2 und zweiten Führungsschienen 8 eine sehr steife Gesamtkonstruktion.

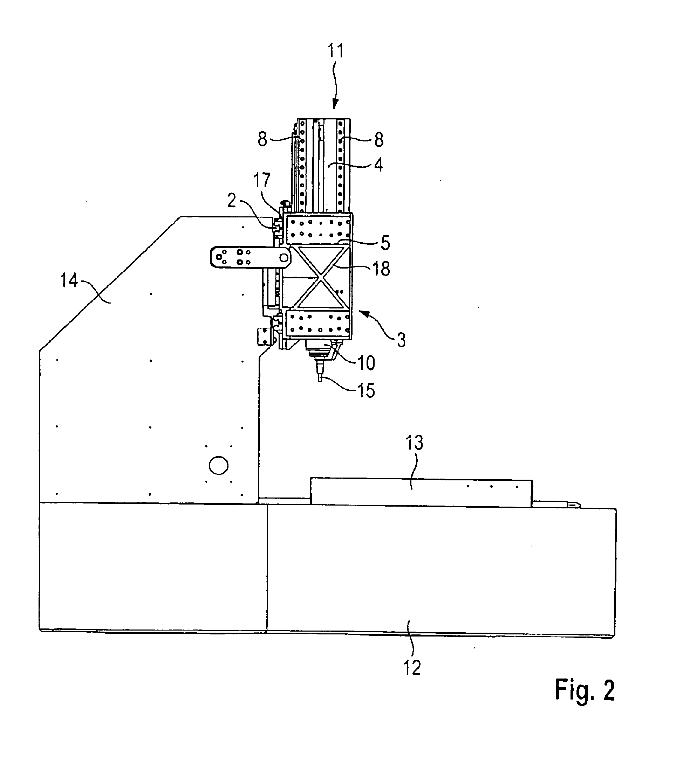

Wie sich aus den Darstellungen, insbesondere der Seitenansicht der Fig. 2 ergibt, ist es möglich, die Drehachse der Werkzeugspindel 10 in einem sehr geringen Abstand zu den ersten Führungsschienen 2 anzuordnen. Hierdurch ergeben sich kurze Hebelarme, und, daraus resultierend, geringe Kräfte bzw. Momente.

Die Fig. 5 zeigt weiterhin einen Glasmaßstab 19, welcher zur Regelung der Bewegung des zweiten Schlittens 4 eingesetzt wird. Mit dem Bezugszeichen 20 ist ein Linearmotor dargestellt, welcher einer Bewegung längs der zweiten linearen Führungsbahn 11 dient, während mittels eines Linearmotors 21 eine Bewegung längs der ersten linearen Führungsbahn 1 möglich ist.

Es ist auch möglich, bei einer Werkzeugmaschine zwei derartige Werkzeugmaschinenführungsschlittenanordnungen zu kombinieren.

### Bezugszeichenliste

| | |
|---|---|
| 1 | erste lineare Führungsbahn (Achse, Bewegungsachse, Querachse, X-Achse) |
| 2 | erste Führungsschiene |
| 3 | erster Schlitten |
| 4 | zweiter Schlitten |
| 5 | Lagerelement |
| 6 | Funktionsfläche |
| 7 | Funktionsfläche |
| 8 | zweite Führungsschiene |
| 9 | plattenförmiges Verbindungselement |
| 10 | Werkzeugspindel |
| 11 | zweite lineare Führungsbahn (Achse, Bewegungsachse, Hochachse, Y-Achse) |
| 12 | Gestell |
| 13 | Tisch |
| 14 | Portal |
| 15 | Werkzeug |
| 16 | Führungswagen (Hochachse) |
| 17 | Führungswagen (Querachse) |
| 18 | Verrippung |
| 19 | Glasmaßstab |
| 20 | Linearmotor (Hochachse) |
| 21 | Linearmotor (Querachse) |

## Patentansprüche

1. Werkzeugmaschinenführungsschlittenanordnung mit einer ersten linearen, horizontal angeordneten Führungsbahn (1) mit zumindest zwei ersten parallelen, in einer vertikalen Ebene übereinander angeordneten Führungsschienen (2), wobei auf der Führungsbahn (1) linear verfahrbar ein erster Schlitten (3) gelagert ist, welcher von der vertikalen Ebene auskragt und welcher einen Freiraum umschließt, in welchem rechtwinklig zu der ersten Führungsbahn (1) ein zweiter Schlitten (4) vertikal linear verfahrbar ist, der Freiraum des ersten Schlittens (3) durch zwei voneinander beabstandete, an den ersten Führungsschienen (2) verfahrbare Lagerelemente (5) gebildet wird.

2. Anordnung nach Anspruch 1, **dadurch gekennzeichnet, dass** das Lagerelement (5) zwei zueinander rechtwinklige Funktionsflächen (6, 7) aufweist, wobei eine Funktionsfläche (6) längs der ersten Führungsschienen (2) verfahrbar ist und die zweite Funktionsfläche (7) zumindest zwei zweite parallele zweite Führungsschienen (8) des zweiten Schlittens (4) lagert.

3. Anordnung nach Anspruch 2, **dadurch gekennzeichnet, dass** jede der Funktionsflächen (6, 7) an zwei zueinander parallelen Führungsschienen gelagert ist.

4. Anordnung nach Anspruch 2 oder 3, **dadurch gekennzeichnet, dass** die Funktionsflächen (6, 7) des Lagerelements (5) jeweils durch ein plattenförmiges Bauteil gebildet sind, wobei die plattenförmigen Bauteile gegeneinander verstrebt und/oder verrippt sind.

5. Anordnung nach einem der Ansprüche 1 bis 4, **dadurch gekennzeichnet, dass** die Lagerelemente (5) über zumindest ein plattenförmiges Verbindungselement (9) miteinander verbunden sind.

6. Anordnung nach Anspruch 5, **dadurch gekennzeichnet, dass** zwei Verbindungselemente (9) vorgesehen sind.

7. Anordnung nach Anspruch 5 oder 6, **dadurch gekennzeichnet, dass** das Verbindungselement (9) verrippt ausgebildet ist.

8. Anordnung nach einem der Ansprüche 5 bis 7, **dadurch gekennzeichnet, dass** die Lagerelemente (5) einen im Wesentlichen rechteckigen Innenraum bilden, in welchem der zweite Schlitten (4) verfahrbar ist.

9. Anordnung nach einem der Ansprüche 1 bis 8, **dadurch gekennzeichnet, dass** der zweite Schlitten (4) drehbar eine Werkzeugspindel (10) lagert.

10. Anordnung nach einem der Ansprüche 1 bis 8, **dadurch gekennzeichnet, dass** der zweite Schlitten (4) eine pinolenförmige Werkzeugspindel (10) lagert.

## Claims

1. A machine tool guide carriage assembly, comprising a first linear, horizontally arranged guide track (1) having at least two first parallel guide rails (2) arranged one on top of the other in a vertical plane, a first carriage (3) being mounted on the guide track (1) in a linearly displaceable manner, said first carriage (3) projecting from the vertical plane and surrounding a free space in which a second carriage (4) is vertically linearly displaceable at a right angle to the first guide track (1), **characterized in that** the free space of the first carriage (3) is formed by two bearing elements (5) that are spaced apart from each other and are displaceable on the first guide rails (2).

2. The assembly of claim 1, **characterized in that** the bearing element (5) comprises two functional surfaces (6, 7) arranged at a right angle to each other, wherein one functional surface (6) is displaceable along the first guide rails (2) and the second functional surface (7) supports at least two parallel second guide rails (8) of the second carriage (4).

3. The assembly of claim 2, **characterized in that** each of the functional surfaces (6, 7) is supported on two guide rails that are in parallel with each other.

4. The assembly of claim 2 or 3, **characterized in that** the functional surfaces (6, 7) of the bearing element (5) are respectively formed by a plate-shaped component, wherein the plate-shaped components are strutted and/or ribbed against each other.

5. The assembly of any of claims 1 to 4, **characterized in that** the bearing elements (5) are mutually connected via at least one plate-shaped connection element (9).

6. The assembly of claim 5, **characterized in that** two connection elements (9) are provided.

7. The assembly of claim 5 or 6, **characterized in that** the connection element (9) is formed in a ribbed manner.

8. The assembly of any of claims 5 to 7, **characterized in that** the bearing elements (5) form a substantially rectangular inner space in which the second carriage (4) is displaceable.

9. The assembly of any of claims 1 to 8, **characterized in that** the second carriage (4) supports a tool spindle (10) in a rotatable manner.

10. The assembly of any of claims 1 to 8, **characterized in that** the second carriage (4) supports a sleeve-shaped tool spindle (10).

## Revendications

1. Agencement de chariot de guidage pour machine-outil avec une première bande de guidage (1) linéaire disposée horizontalement avec au moins deux premiers rails de guidage (2) parallèles disposés l'un au-dessus de l'autre dans un plan vertical, un premier chariot (3) étant logé sur la bande de guidage (1) de manière déplaçable linéairement, ledit premier chariot (3) débordant du plan vertical et entourant un espace libre, dans lequel un second chariot (4) est déplaçable linéairement et verticalement perpendiculairement à la première bande de guidage (1), **caractérisé en ce que** l'espace libre du premier chariot (3) est formé par deux éléments de palier (5) espacés l'un de l'autre, déplaçables sur les premiers rails de guidage (2).

2. Agencement selon la revendication 1, **caractérisé en ce que** l'élément de palier (5) présente deux surfaces fonctionnelles (6, 7) perpendiculaires l'une à l'autre, une surface fonctionnelle (6) étant déplaçable le long des premiers rails de guidage (2) et la seconde surface fonctionnelle (7) logeant au moins deux deuxièmes rails de guidage (8) parallèles du second chariot (4).

3. Agencement selon la revendication 2, **caractérisé en ce que** chacune des surfaces fonctionnelles (6, 7) est logée sur deux rails de guidage parallèles.

4. Agencement selon la revendication 2 ou 3, **caractérisé en ce que** les surfaces fonctionnelles (6, 7) de l'élément de palier (5) sont respectivement formées par un composant en forme de plaque, les composants en forme de plaque étant entretoisés et/ou nervurés l'un contre l'autre.

5. Agencement selon l'une quelconque des revendications 1 à 4, **caractérisé en ce que** les éléments de palier (5) sont reliés entre eux par au moins un élément de liaison (9) en forme de plaque.

6. Agencement selon la revendication 5, **caractérisé en ce que** deux éléments de liaison (9) sont prévus.

7. Agencement selon la revendication 5 ou 6, **caractérisé en ce que** l'élément de liaison (9) est réalisé de manière nervurée.

8. Agencement selon l'une quelconque des revendications 5 à 7, **caractérisé en ce que** les éléments de palier (5) forment un espace intérieur sensiblement rectangulaire, dans lequel le second chariot (4) peut être déplacé.

9. Agencement selon l'une quelconque des revendications 1 à 8, **caractérisé en ce que** le second chariot (4) loge de manière rotative une broche d'outil (10).

10. Agencement selon l'une quelconque des revendications 1 à 8, **caractérisé en ce que** le second chariot (4) loge une broche d'outil (10) en forme de fourreau.
